Europäisches Patentamt

European Patent Office

Office européen des brevets

(11) Veröffentlichungsnummer: **0 119 557**
**A2**

# (12) EUROPÄISCHE PATENTANMELDUNG

(21) Anmeldenummer: **84102536.4**

(51) Int. Cl.³: **A 23 K 1/02**

(22) Anmeldetag: **09.03.84**

(30) Priorität: **22.03.83 DE 3310261**

(43) Veröffentlichungstag der Anmeldung: **26.09.84**
**Patentblatt 84/39**

(84) Benannte Vertragsstaaten: **AT BE CH DE FR GB IT LI LU NL SE**

(71) Anmelder: **HOECHST AKTIENGESELLSCHAFT, Postfach 80 03 20, D-6230 Frankfurt am Main 80 (DE)**

(72) Erfinder: **Pirig, Wolf-Dieter, Kastanienweg 17, D-5350 Euskirchen (DE)**
Erfinder: **Dany, Franz-Josef, Dr., Heddinghovener Strasse 47, D-5042 Erftstadt (DE)**
Erfinder: **Kandler, Joachim, Dr., Amselweg 10, D-5042 Erftstadt (DE)**
Erfinder: **Zschoche, Hans, Karl-Michel-Strasse 3, D-5630 Remscheid (DE)**

(54) **Verfahren zur Herstellung von melassehaltigen, mineralischen Mischfuttermitteln.**

(57) Zur Herstellung von rieselfähigen mineralischen Futtermitteln aus Gemischen, die aus den pulverförmigen Komponenten dieser Futtermittel und Melasse bestehen, wird das Gemisch kontinuierlich einer Zone zugeführt, in der es zwischen sich zueinander im entgegengesetzten Sinn drehenden Körpern kontinuierlich zu einem Festkörper geformt wird. Der erhaltene Festkörper wird anschließend auf eine gewünschte Granulatgröße gebrochen.

Verfahren zur Herstellung von melassehaltigen,
mineralischen Mischfuttermitteln


Die vorliegende Erfindung betrifft ein Verfahren zur Herstellung von melassehaltigen,mineralischen Futtermittelmischungen, die rieselfähig und staubfrei sind, insbesondere von solchen, die einen Wassergehalt von weniger als 10 Gew% aufweisen, durch Mischen der pulverförmigen Komponenten dieser Futtermittel mit Melasse.

Es ist bekannt, mineralische Futtermittel durch Mischen von Phosphaten des Natriums, Magnesiums und Calciums, von Viehsalz, Futterkalk, Vitaminen, Spurenelementen und Melasse in Zwangsmischern mit bewegten Mischorganen, z.B. Schaufeln, Paddeln oder Schnecken, herzustellen (DE-PS 13 01 705, DE-PS 20 00 791, DE-OS 29 35 171).

Nachteilig ist bei diesen so erhaltenen Mischungen, daß sie einen Staubanteil von 20 Gew% und mehr aufweisen. Soll dieser Staub noch gebunden werden, müssen zusätzlich ca. 10-20 Gew% Wasser zur Granulation zugesetzt werden. Dieses Wasser muß jedoch nach erfolgter Granulation unter Einsatz von thermischer Energie wieder entfernt werden, da vom Gesetzgeber für diese Futtermittel max. 10 Gew% $H_2O$ vorgeschrieben sind. Außerdem nimmt die Vitaminstabilität bei höheren Wassergehalten erheblich ab. Nachteilig ist weiter, daß diese Produkte zum Verkleben neigen.

Es ist daher Aufgabe der vorliegenden Erfindung, melassehaltige, mineralische Futtermittel, die rieselfähig und staubfrei sind, ohne Verwendung von Granulierhilfsmitteln herzustellen, wobei von Gemischen ausgegangen werden kann, welche neben Melasse, die übrigen Komponenten in Pulverform - und damit in einer im Handel sehr preisgünstig erhältlichen Form - enthalten.

Diese Aufgabe konnte überraschenderweise dadurch gelöst werden, daß man ein melassehaltiges Mineralfuttergemisch üblicher Zusammensetzung kompaktiert, indem man es kontinuierlich einer Zone zuführt, in der es zwischen sich zueinander im entgegengesetzten Sinn drehenden Körpern kontinuierlich zu einem Festkörper geformt wird. Diesen Festkörper bricht man dann anschließend auf eine gewünschte Granulatgröße.

Als pulverförmige Komponenten setzt man dabei vorzugsweise Mischungen ein, die in bekannter Weise im wesentlichen aus sauren Phosphaten des Natriums, Calciums und Magnesiums, ferner aus Viehsalz, Futterkalk, Spurenelementen und Vitaminen bestehen und zwar vorteilhafterweise solchen, die einen Korndurchmesser von weniger als 4 mm aufweisen, wobei der Korndurchmesser der Hauptmenge weniger als 0,5 mm, insbesondere weniger als 0,3 mm beträgt.

Als Ausgangsprodukte eignen sich vor allem solche Mineralfuttergemische, die 3 bis 25 Gew% Melasse und 75 bis 97 Gew% der pulverförmigen Komponenten enthalten.

Das eingesetzte Mineralfuttergemisch wird vorzugsweise in einer Walzenpresse und unter einem Lineardruck von 4,0 bis 17,5 kN pro cm Walzenlänge zu einem Festkörper kompaktiert.

Dabei ist unter Lineardruck die gleichförmige, über die Mantellinie der Walzen verteilte Gewichtskraft zu verstehen. Besonders haben sich dabei Walzenpressen bewährt, bei denen die Walzen senkrecht übereinander angeordnet sind, wobei es sich ferner als vorteilhaft erwiesen hat, den Walzen das Ausgangsmaterial nicht über eine große, sondern über mehrere horizontal nebeneinander gelagerte und in ihrem Durchmesser kleinere Schnecken zuzuführen.

Eine weitere Ausgestaltung des erfindungsgemäßen Verfahrens besteht darin, daß man nach dem Brechen das erhaltene Granulat siebt und den Feinanteil, der kleiner als der gewünschte Granulatdurchmesser ist, wieder als Ausgangsprodukt einsetzt und den Grobanteil, der größer als der gewünschte Korngranulatdurchmesser ist, in den Brecher zurückführt.

Das erfindungsgemäße Verfahren zeichnet sich dadurch aus, daß

1. ein Produkt in beliebigen Korngrößen von 0,1 - 10 mm, insbesondere von 0,5 - 3 mm, hergestellt werden kann;

2. kein Granulierhilfsmittel, z.B. Wasser, notwendig ist, das anschließend wieder entfernt werden muß;

3. das Produkt staubfrei ist und trotz des Gehaltes an Melasse nicht klebt;

4. ein Entmischen des Verfahrensproduktes ausgeschlossen ist und jedes Korn die gleiche Zusammensetzung aufweist; und

5. die Aufnahme des Verfahrensproduktes durch das Vieh sehr gut ist, da granulierte Produkte vom Vieh lieber aufgenommen werden als pulvrige, staubige Ware.

Obwohl es an sich bekannt ist, pulverförmige Mischungen auf Walzenpressen zu granulieren, war für einen Fachmann nicht vorhersehbar, daß man in der erfindungsgemäßen Weise aus pulvrigen Mineralfuttermischungen und Melasse Produkte erzeugen kann, die weder während ihrer Herstellung an den Werkzeugen noch anschließend als verpackte Ware kleben oder zusammenbacken.

Dies war vor allem deshalb überraschend, weil bekannt ist, daß die Kompaktierung von melassehaltigen Mischfuttermitteln auf beträchtliche Schwierigkeiten stößt, die strenge Einhaltung stark eingeschränkter Verfahrensparameter erfordert und jeweils nur auf bestimmte, in ihrer Zusammensetzung sehr eng begrenzte Rezepturen beschränkt ist.

Im Gegensatz dazu können nach der erfindungsgemäßen Arbeitsweise sowohl die Zusammensetzungen der pulverförmigen Komponenten als auch die Melassegehalte der erhaltenen Mischfuttermittel in weiten Grenzen variieren, ohne daß sich daraus verfahrenstechnische Schwierigkeiten ergeben oder ein besonderer apparativer Aufwand erforderlich wäre.


Beispiel 1

Eine pulverförmige Mischung bestehend aus:

60 Gew% Calcium-Magnesium-Natriumphosphat
(mit 9 Gew% Ca, 5 Gew% Mg, 12 Gew% Na und 17,5
Gew% P)
 5 Gew% Natriumchlorid
 5 Gew% Calciumcarbonat
 2 Gew% Magnesiumoxid
12 Gew% Dicalciumphosphat
 4 Gew% Vitamin-Vormischung
 4 Gew% Spurenelement-Vormischung und
 8 Gew% Melasse ($H_2O$-Gehalt 23 Gew%)

besaß ein Kornspektrum von: < 0,125 mm ca. 32 Gew%
< 0,5 mm ca. 75 Gew%
Rest ca. 25 Gew% bis 3 mm, und

wurde über mehrere, horizontal nebeneinander angeordnete Schnecken einer Walzenpresse zugeführt, deren Walzen senkrecht übereinander angeordnet waren. In der Preßzone herrschte ein Lineardruck von 4,9 kN pro cm Walzenlänge. Das erhaltene Preßprodukt wurde anschließend in einem Brecher gebrochen, wobei sich ein Kornspektrum des Gutes ergab von:

$< 0,125$ mm     0,1 Gew%

$< 0,5$   mm     13,8 Gew%

$> 3,0$   mm     1,9 Gew%

Die Anteile $< 0,5$ mm wurden in die Walzenpresse, die Anteile $> 3,0$ mm wurden in den Brecher zurückgeführt. Der Rest wurde in eine Abrolltrommel gegeben, um das Granulat von den beim Brechen entstandenen scharfen Kanten zu befreien.
Nachdem das Trommelprodukt vom entstandenen Staub befreit war, wurde es abgepackt. Es war nicht im geringsten klebrig und zeichnete sich durch eine sehr gute Rieselfähigkeit und Lagerstabilität aus.


Beispiel 2

Es wurde wie in Beispiel 1 beschrieben verfahren, mit der Änderung, daß als Ausgangsprodukt eine pulverförmige Mischung eingesetzt wurde, bestehend aus:

45 Gew%  Calcium-Magnesium-Natriumphosphat
          (mit 9 Gew% Ca, 5 Gew% Mg, 12 Gew% Na und 17,5
          Gew% P)
12 Gew%  Calciumcarbonat
1,5 Gew% Magnesiumoxid
24 Gew%  Dicalciumphosphat
 2 Gew%  Spurenelement-Vormischung
 2 Gew%  Vitamin-Vormischung

4,5 Gew% Haferschalen und

9 Gew% Melasse ($H_2O$ 23 Gew%)

Diese Mischung besaß ein Kornspektrum von:

< 0,125 mm ca. 30 Gew%

< 0,5 mm ca. 60 Gew%

Rest ca. 40 Gew% bis 3,5 mm

Der Lineardruck in der Walzenpresse betrug 8,2 kN pro cm Walzenlänge.

Nach dem Brechen wies das Gut ein Kornspektrum auf von:

< 0,125 mm 0,4 Gew%

< 0,5 mm 14,2 Gew%

> 3,0 mm 1,2 Gew%

Beispiel 3

Es wurde wie in Beispiel 1 beschrieben verfahren mit der Änderung, daß eine pulverförmige Mischung eingesetzt wurde, bestehend aus:

30 Gew% Calcium-Magnesium-Natriumphosphat
(mit 9 Gew% Ca, 5 Gew% Mg, 12 Gew% Na und 17,5 Gew% P)

15 Gew% Natriumchlorid

21 Gew% Calciumcarbonat

2 Gew% Magnesiumoxid

6 Gew% Dicalciumphosphat

2 Gew% Vitamin-Vormischung

2 Gew% Spurenelement-Vormischung und

22 Gew% Melasse ($H_2O$ 23 Gew%).

0119557

Diese Mischung besaß ein Kornspektrum von:

< 0,125 mm ca. 20 Gew%
< 0,5   mm ca. 55 Gew%
    Rest ca. 45 Gew% bis 4 mm

Der Lineardruck in der Walzenpresse betrug 11,4 kN pro cm Walzenlänge.
Nach dem Brechen wies das Gut ein Kornspektrum auf von:

< 0,125 mm  0,1 Gew%
< 0,5   mm  9,6 Gew%
> 3,0   mm  3,2 Gew%

Verfahren zur Herstellung von melassehaltigen,
mineralischen Mischfuttermitteln

Patentansprüche

1. Verfahren zur Herstellung von rieselfähigen mineralischen
Futtermitteln aus Gemischen,die aus den pulverförmigen
Komponenten dieser Futtermittel und Melasse bestehen,
dadurch gekennzeichnet, daß man ein melassehaltiges Mineralfuttergemisch üblicher Zusammensetzung kompaktiert,
indem man es kontinuierlich einer Zone zuführt,in der es
zwischen sich zueinander im entgegengesetzten Sinn drehenden Körpern kontinuierlich zu einem Festkörper geformt
wird,und man diesen Festkörper anschließend auf eine gewünschte Granulatgröße bricht.

2. Verfahren nach Anspruch 1, dadurch gekennzeichnet, daß man
als pulverförmige Komponenten Mischungen einsetzt, die im
wesentlichen aus sauren Phosphaten des Natriums, Calciums
und Magnesiums, ferner aus Viehsalz, Futterkalk, Spurenelementen und Vitaminen bestehen.

3. Verfahren nach Anspruch 1 oder 2, dadurch gekennzeichnet,
daß man pulverförmige Komponenten einsetzt, die einen
Korndurchmesser von weniger als 4 mm aufweisen.

4. Verfahren nach Anspruch 3, dadurch gekennzeichnet, daß man
pulverförmige Komponenten einsetzt, die im wesentlichen
einen Korndurchmesser von weniger als 0,5 mm aufweisen.

0119557

5. Verfahren nach einem der Ansprüche 1 bis 4, dadurch gekennzeichnet, daß man Mineralfuttergemische einsetzt, die 3 bis 25 Gew% Melasse und 75 bis 97 Gew% der pulverförmigen Komponenten enthalten.

6. Verfahren nach einem der Ansprüche 1 bis 5, dadurch gekennzeichnet, daß man das eingesetzte Mineralfuttergemisch unter einem Lineardruck von 4,0 bis 17,5 kN pro cm Walzenlänge zu einem Festkörper kompaktiert.

7. Verfahren nach einem der Ansprüche 1 bis 6, dadurch gekennzeichnet, daß man das eingesetzte Mineralfuttermittelgemisch in einer Walzenpresse formt.

8. Verfahren nach Anspruch 7, dadurch gekennzeichnet, daß man das eingesetzte Mineralfuttermittelgemisch in Walzenpressen formt, deren Walzen senkrecht übereinander angeordnet sind.

9. Verfahren nach Anspruch 8, dadurch gekennzeichnet, daß man das Mineralfuttermittelgemisch den Walzen über mehrere horizontal nebeneinander angeordnete Schnecken zuführt.

10. Verfahren nach einem der Ansprüche 1 bis 9, dadurch gekennzeichnet, daß man das nach dem Brechen erhaltene Granulat in Abrolltrommeln von seinen scharfen Kanten befreit.